# EUROPEAN PATENT SPECIFICATION

(11) **EP 1 964 088 B1**
(45) Date of publication and mention of the grant of the patent: **01.12.2010**
(21) Application number: 06824615.6
(22) Date of filing: 06.12.2006
(51) Int. Cl.: G09F 15/00, F16F 9/00, E06B 9/00, G03B 21/56

(54) **A DISPLAY MEANS**
ANZEIGEMITTEL
MOYEN D'AFFICHAGE

(30) Priority: 08.12.2005 SE 0502702
(43) Date of publication of application: 03.09.2008
(73) Proprietor: Expand International AB, 120 30 Stockholm (SE)
(72) Inventor: ÅBERG, Robert, S-334 32 Anderstorp (SE)
(74) Representative: Holmberg, Magnus
(86) International application number: PCT/SE2006/050549
(87) International publication number: WO 2007/067142

(56) References cited:
- WO-A-2005/043235
- DE-A1- 4 434 735
- US-A- 1 974 076
- US-A- 5 501 051
- US-A1- 2005 028 943

## Description

### Technical field of the invention

The present invention relates generally to a display means and, for instance, more particularly to a display means that includes a readily collapsed and readily erected stand, where the stand used can be adapted to secure a flexible information-presenting screen when in its erected state, and by flexible being meant that the screen can be rolled up onto and unrolled from a bobbin or a rod, normally in the form of a hollow-cylindrical body.

### Background of the invention

A telescopic pole with a lock means can be used for holding the printed graphics/screen in a display means (roll up/retractable banner stands) (e.g. Expand QuickScreen). The advantage is that the telescopic pole enables the graphics to be continuously adjusted to a desirable height/size. However, the lock means can be opened by mistake and then the graphics risk to get damaged when the roll up mechanism is pulling the graphics with a high speed in an uncontrollable manner into the cassette.

The patent document WO 2005/043235 A relates to a portable screen assembly that is easy to carry and can be installed at an optional location such as on a floor, a table or the like. According to one embodiment of the screen assembly, the column comprises three stages of pipe, and a slide locking mechanism. A sliding member 36 is fitted on the rear end portion of the inner pipe 6k. A pipe engaging portion 37 includes an engaging member 38 with a ball-type projection portion 38a, and a spring member 39. The outer pipe 6b has a plurality of through holes 62b. The ball-type projection portion 38a is engaged with the through hole 62b by being pressed by the spring member 39 and the inner pipe 6k is fixed.

### Summary of the invention

It is an object of the present invention to solve the above mentioned problem. This is achieved with a display means according to Claim 1. The display means comprises a stand adapted to secure a screen. The stand comprises a first part which supports against an underlying supportive surface, and comprises a bobbin enclosed in a cavity in said first part. The screen can be wound onto and withdrawn from said bobbin. The stand also comprises a telescopic pole means comprising an inner tube, and an outer tube, which tubes telescopically can be moved in relation to each other. The stand also comprises a lock means arranged on said inner tube, and operable to releaseably lock said tubes in relation to each other, The stand also comprises a coupling means arranged at a first end of said inner tube, and operable to secure said screen when it is at least partly withdrawn from said bobbin. The stand also comprises a damper means comprising a first part arranged on said inner tube, and a second part arranged on said outer tube. The damper means is operable to exert a damping force when said tubes are moved in relation to each other with at least a predetermined threshold velocity value.

The advantage with this solution is that when the pole means is pulled out or pushed in, with a low controlled speed, there is no resistance in the damper means, but when/if the uncontrolled situation described above occurs, the damper means exert a damping force, avoiding the uncontrolled situation.

A further advantage in this context is achieved if said damper means is an air damper means, and in that said first part is secured at a second end of said inner tube, and comprises a sealing means abutting and sealing against an inner side of said outer tube.

Furthermore, it is an advantage in this context if said second part is secured at an inner side of said outer tube in an airtight way.

A further advantage in this context is achieved if said sealing means is a gasket of rubber.

Furthermore, it is an advantage in this context if said gasket is an O-ring arranged in a groove in said first part.

A further advantage in this context is achieved if said outer tube comprises an air outlet arranged in the vicinity of said second part, between said second part and said first part.

Furthermore, it is an advantage in this context if said air outlet is a through hole in said outer tube.

According to another embodiment, it is an advantage if said damper means is a liquid damper means, and in that said liquid damper means also comprises a third part arranged at one end of said outer tube, through which third part of said inner tube is running.

A further advantage in this context is achieved if between said second part and said second part and said third part is arranged a liquid chamber filled with liquid.

Furthermore, it is an advantage in this context if said first part is arranged in the vicinity of a second end of said inner tube, and is a piston provided with through holes substantially arranged in parallel with said inner tube whereby said liquid is forced to pass said through holes when said tubes are moved in relation to each other.

A further advantage in this context is achieved if said second part is a liquid tight sealing, and in that said third part is also a liquid tight sealing.

Furthermore, it is an advantage in this context if said liquid is oil.

A further advantage in this context is achieved if said lock means is an eccentric lock means.

Furthermore, it is an advantage in this context if said bobbin is actuated by a spring arrangement adapted to act on said screen with decreasing power of force during a screen wind-up phase and with increasing power of force during a screen unwinding phase.

It will be noted that the term "comprises/comprising" as used in this description is intended to denote the presence of a given characteristic, step or component, without excluding the presence of one or more other characteristic features, integers, steps, components or groups thereof.

Embodiments of the invention will now be described with reference to the accompanying drawings, in which:

### Brief description of the drawings

Fig. 1 illustrates assembly sequences A-G, applicable to an earlier known display means;
Fig. 2 is a cross section view of a first embodiment of the display means according to the present invention;
Fig. 3 is a perspective view, partially exploded, of said first embodiment of the display means disclosed in Fig. 2; and
Fig. 4 is a side view, partially in cross section, of a second embodiment of the display means according to the present invention.

### Detailed description

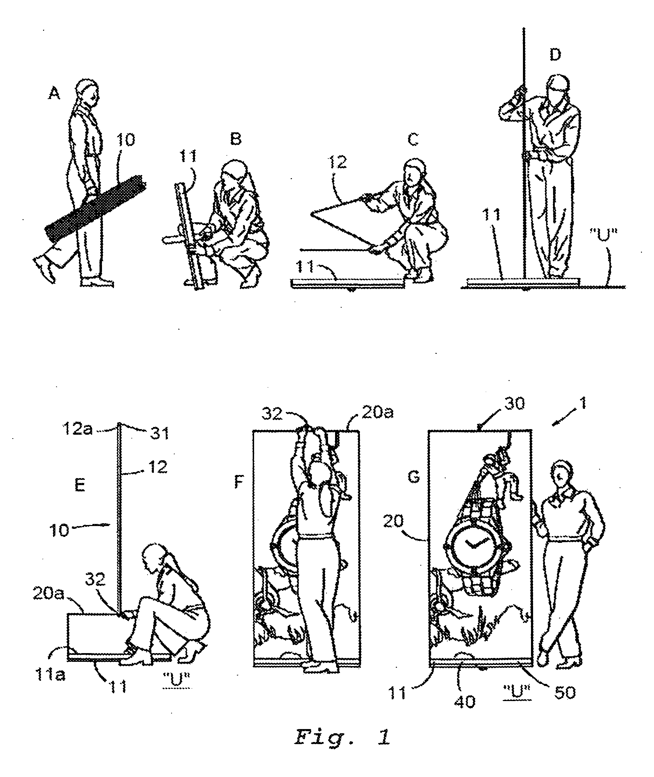

In Fig. 1 there is disclosed a more or less complete assembly sequence with the aid of individual assembly steps referenced A-G of a display means 1, this assembly sequence or erection sequence also being applicable to the display means 1 according to the present invention.

According to step A, the display means 1 comprises a stand 10, which in a fully erected state (steps F, G) firmly supports a screen 20, wherein the stand 10 comprises a first part 11 which supports against an underlying supportive surface U (step D), and further includes a foldable part 12 which, when the stand 10 is erected, extends upwardly from the first part 11.

One upwardly extending end part 12a of the second part 12 (step E) has a first coupling element 31 included in a two-part coupling arrangement 30, wherewith the other coupling element 32 of the coupling arrangement is joined to the screen 20 either directly or indirectly, and orientated in connection with the upper edge part 20a of the screen 20.

The screen 20 can be wound onto and unwound from a bobbin 40 enclosed in a cavity (not shown) located in the first part 11, wherein the bobbin 40 can be actuated by a spring arrangement 50 that includes an associated spring unit.

The spring arrangement 50 is designed to act on the screen 20 with a decreasing force during a screen wind-up phase (the steps from F to E) with the aid of a spring unit consisting of helically twisted or wound metal wire, wherewith the screen 20 is acted upon at an increasing force during an unwinding phase (the steps from E to F).

The spring arrangement 50 is also adapted to act on the screen 20 with a chosen initial power when the screen 20 has been fully wound around the bobbin 40 (in accordance with the step D).

The first part 11 includes a slot 11a through which the screen 20 passes so as to be unwound from or wound onto the bobbin 40 present in the cavity.

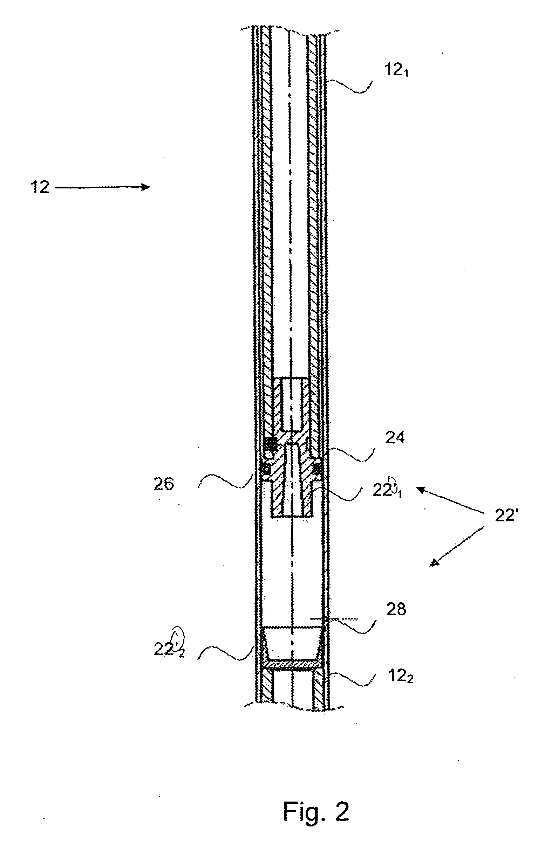

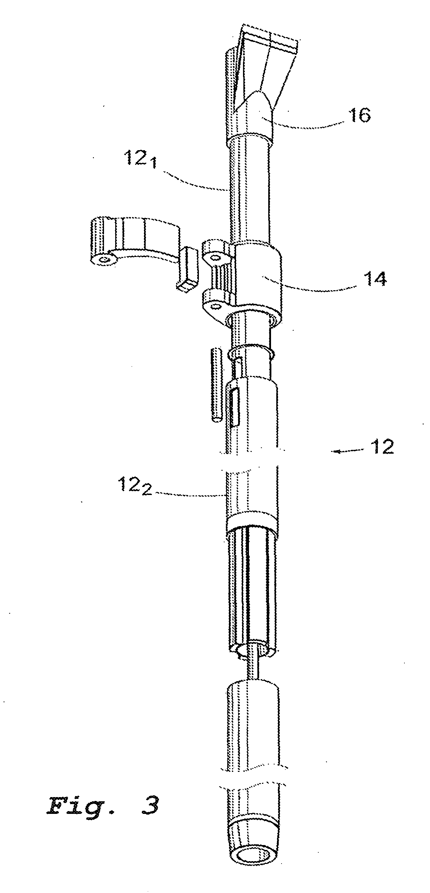

In Fig. 2 there is disclosed a cross section view of a first embodiment of the display means 1 according to the present invention. In Fig. 3 there is disclosed a perspective view, partially exploded, of the first embodiment of the display means 1 disclosed in Fig. 2. Actually, it is not the complete display means 1 that is disclosed. As is apparent in Figs. 2 and 3, the stand 10 comprises a telescopic pole means 12, comprising an inner tube 12₁ and an outer tube 12₂, which tubes 12₁, 12₂ can be telescopically moved in relation to each other. The stand 10 (see Fig. 3) also comprises a lock means 14, in Fig. 3 in the form of an eccentric lock means 14, arranged on the inner tube 12₁ and operable to releaseably lock the tubes 12₁, 12₂ in relation to each other. The stand 10 (see Fig. 3) also comprises a coupling means 16 arranged at a first end of the inner tube 12₁, and operable to secure the screen 20 when it is at least partly withdrawn from the bobbin 40 (see Fig. 1). The stand 10 also comprises a damper means 22', in Figs. 2 and 3 in the form of an air damper means 22'. The air damper means 22' comprises a first part 22'₁, and a second part 22'₂ arranged on the outer tube 12₂. The first part 22'₁ is secured at a second end of the inner tube 12₁, and comprises a sealing means 24 abutting and sealing against an inner side of the outer tube 12₂. In Figs. 2 and 3, the sealing means 24 is in the form of an O-ring 24 arranged in a groove 26 in the first part 22'₁. The second part 22'₂ is secured at an inner side of the outer tube 12₂ in an airtight way. As is apparent e.g. in Fig. 2, the outer tube 12₂ comprises an air outlet 28 arranged in the vicinity of the second part 22'₂, between the second part 22'₂ and the first part 22'₁. In Fig. 2, the air outlet 28 is in the form of a through hole 28 in the outer tube 12₂.

This air damper means 22' has the advantage that when it is pulled out or pushed in, with a low controlled speed, there is no resistance, but when/if the uncontrolled situation described above occurs, i.e. the roll up mechanism is pulling the screen 20 with a high speed in an uncontrollable manner into the cassette 11, the air that is let out is restricted due to its high speed through a small diameter hole, thereby damping the speed into a controlled movement.

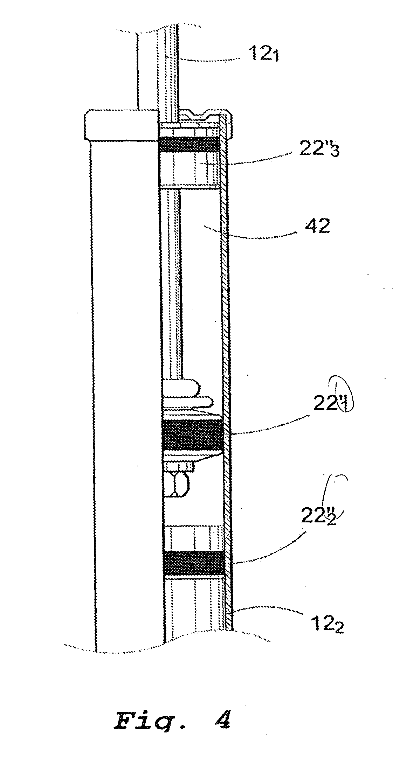

In Fig. 4, there is disclosed a side view, partially in cross section, of a second embodiment of the display means 1 according to the present invention. Actually, it is not the complete display means 1 that is disclosed. This damper means 22" is a liquid damper means 22", which also comprises a first part 22"₁, and a second part 22"₂ arranged on the outer tube 12₂. The liquid damper means 22" alwo comprises a third part 22"₃ arranged at one end of the outer tube 12₂. As is apparent in Fig. 4, the inner tube 12₁ is running through said third part 22"₃. A liquid chamber 42 is arranged between the second part 22"₂ and the third part 22"₃, which chamber 42 is filled with a liquid. The first part 22"₁ is arranged in the vicinity of a second end of the inner tube 12₁, and is a piston 22"₁ provided with a number of through holes substantially arranged in parallel with the inner tube 12₁. Then the tubes 12₁, 12₂ are moved in relation to each other, the liquid in the chamber 42 is forced to pass through the through holes. The second part 22"₂ and the third part 22"₃ are each a liquid tight sealing 22"₂, 22"₃. The liquid can e.g. be oil.

This liquid damper means 22" has the advantage that when it is pulled out or pushed in, with a low controlled speed, there is no resistance, but when/if the uncontrolled situation described above occurs, i.e. the roll up mechanism is pulling the screen 20 with a high speed in an uncontrollable manner into the cassette 11, the liquid that is passed the through holes is restricted due to its high speed through small diameter holes, thereby damping the speed into a controlled movement.

It will be understood that the present invention is not restricted to the above mentioned embodiments, and that a person skilled in this art will be aware of the fact that many modifications are possible within the scope of the accompanying claims.

## Claims

1. A display means (1) comprising a stand (10) adapted to secure a screen (20), wherein the stand (10) comprises a first part (11) which supports against an underlying supportive surface (u) and comprises a bobbin (40) enclosed in a cavity in said first part (11), wherein said screen (20) can be wounded onto and withdrawn from said bobbin (40), wherein said stand (10) also comprises a telescopic pole means (12) comprising an inner tube (12₁) and an outer tube (12₂), which tubes (12₁, 12₂) telescopically can be moved in relation to each other, wherein said stand (10) also comprises a lock means (14) arranged on said inner tube (12₁) and operable to releasable lock said tubes (12₁, 12₂) in relation to each other, a coupling means (16) arranged at a first end of said inner tube (12₁) and operable to secure said screen (20) when it is at least partly withdrawn from said bobbin (40), and a damper means (22'; 22") comprising a first part (22₁'; 22₁") arranged on said inner tube (12₁), and a second part (22₂'; 22₂') arranged on said outer tube (12₂), wherein said damper means (22'; 22") is operable to exert a damping force when said tubes (12₁, 12₂) are moved in relation to each other with at least a predetermined threshold velocity value, **characterized in that** said damper means (22') is an air damper means (22'), and **in that** said first part (22₁') is secured at a second end of said inner tube (12₁), and comprises a sealing means (24) abutting and sealing against an inner side of said outer tube (12₂), or said damper means (22") is a liquid damper means (22"), and **in that** said liquid damper means (22") also comprises a third part (22₃") arranged at one end of said outer tube (12₂), through which third part (22₃") said inner tube (12₁) is running.

2. A display means (1) according to claim 1, **characterized in that** said second part (22₂') is secured at an inner side of said outer tube (12₂) in an airtight way.

3. A display means (1) according to claim 2, **characterized in that** said sealing means (24) is a gasket (24) of rubber.

4. A display means (1) according to claim 3, **characterized in that** said gasket (24) is an O-ring (24) arranged in a groove (26) in said first part (22₁').

5. A display means (1) according to any one of claims 1-4, **characterized in that** said outer tube (12₂) comprises an air outlet (28) arranged in the vicinity of said second part (22₂'), between said second part (22₂') and said first part (22₁').

6. A display means (1) according to claim 5, **characterized in that** said air outlet (28) is a through hole (28) in said outer tube (12₂).

7. A display means (1) according to claim 1, **characterized in that** between said second part (22₂") and said third part (22₃") is arranged a liquid chamber (42) filled with liquid.

8. A display means (1) according to claim 7, **characterized in that** said first part (22₁") is arranged in the vicinity of a second end of said inner tube (12₁), and is a piston (22₁") provided with through holes substantially arranged in parallel with said inner tube (12₁) whereby said liquid is forced to pass said through holes when said tubes (12₁, 12₂) are moved in relation to each other.

9. A display means (1) according to claim 7 or 8, **characterized in that** said second part (22₂") is a liquid tight sealing (22₂"), and **in that** said third part (22₃") also is a liquid tight sealing (22₃").

10. A display means (1) according to any one of claims 7-9, **characterized in that** said liquid is oil.

11. A display means (1) according to any one of claims 1-10, **characterized in that** said lock means (14) is an eccentric lock means (14).

12. A display means (1) according to any one of claims 1-11, **characterized in that** said bobbin (40) is actuated by a spring arrangement (50) adapted to act on said screen (20) with decreasing power of force during a screen wind-up phase and with increasing power of force during a screen unwinding phase.

## Patentansprüche

1. Anzeigemittel (1), umfassend einen Ständer (10), der angepasst ist, eine Bildwand (20) zu sichern, wobei der Ständer (10) einen ersten Teil (11) umfasst, der sich an einer darunter liegenden Stützfläche (u) abstützt und eine Spule (40) umfasst, die in einem Hohlraum in dem ersten Teil (11) eingeschlossen ist, wobei die Bildwand (20) auf die Spule (40) gewickelt und von ihr abgezogen werden kann, wobei der Ständer (10) auch ein Teleskopmastmittel (12) umfasst, das ein inneres Rohr (12₁) und ein äußeres Rohr (12₂) umfasst, wobei die Rohre (12₁, 12₂) teleskopisch in Bezug zueinander bewegt werden können, wobei der Ständer (10) auch ein Verriegelungsmittel (14) umfasst, das auf dem inneren Rohr (12₁) angeordnet ist und bedienbar ist, die Rohre (12₁, 12₂) in Bezug zueinander lösbar zu verriegeln, ein Kupplungsmittel (16), das an einem ersten Ende des inneren Rohrs (12₁) angeordnet ist und bedienbar ist, die Bildwand (20) zu sichern, wenn er zumindest teilweise von der Spule (40) abgezogen wird, und ein Dämpfermittel (22'; 22"), umfassend einen ersten Teil (22₁', 22₁"), der an dem inneren Rohr (12₁) angeordnet ist, und einen zweiten Teil (22₂'; 22₂'), der an dem äußeren Rohr (12₂) angeordnet ist, wobei das Dämpfermittel (22'; 22") bedienbar ist, eine Dämpfungskraft auszuüben, wenn die Rohre (12₁, 12₂) in Bezug zueinander mit mindestens einem vorbestimmten Schwellengeschwindigkeitswert bewegt werden, **dadurch gekennzeichnet, dass** das Dämpfermittel (22') ein Luftdämpfermittel (22') ist und dass der erste Teil (22₁') an einem zweiten Ende des inneren Rohrs (12₁) gesichert ist und ein Abdichtungsmittel (24) umfasst, das an einer Innenseite des äußeren Rohrs (12₂) anliegt und sie abdichtet, oder dass das Dämpfermittel (22") ein Flüssigkeitsdämpfermittel (22") ist, und dass das Flüssigkeitsdämpfermittel (22") auch einen dritten Teil (22₃") umfasst, der an einem Ende des äußeren Rohrs (12₂) angeordnet ist, wobei das innere Rohr (12₁) durch diesen dritten Teil (22₃) verläuft.

2. Anzeigemittel (1) nach Anspruch 1, **dadurch gekennzeichnet, dass** der zweite Teil (22₂') an einer Innenseite des äußeren Rohrs (12₂) auf luftdichte Weise gesichert ist.

3. Anzeigemittel (1) nach Anspruch 2, **dadurch gekennzeichnet, dass** das Abdichtungsmittel (24) eine Dichtung (24) aus Gummi ist.

4. Anzeigemittel (1) nach Anspruch 3, **dadurch gekennzeichnet, dass** die Dichtung (24) ein O-Ring (24) ist, der in einer Nut (26) in dem ersten Teil (22₁') angeordnet ist.

5. Anzeigemittel (1) nach einem der Ansprüche 1- 4, **dadurch gekennzeichnet, dass** das äußere Rohr (12₂) einen Luftauslass (28) umfasst, der in der Nähe des zweiten Teils (22₂') zwischen dem zweiten Teil (22₂') und dem ersten Teil (22₁') angeordnet ist.

6. Anzeigemittel (1) nach Anspruch 5, **dadurch gekennzeichnet, dass** der Luftauslass (28) ein Durchgangsloch (28) in dem äußeren Rohr (12₂) ist.

7. Anzeigemittel (1) nach Anspruch 1, **dadurch gekennzeichnet, dass** zwischen dem zweiten Teil (22₂") und dem dritten Teil (22₃") eine Flüssigkeitskammer (42) angeordnet ist, die mit Flüssigkeit gefüllt ist.

8. Anzeigemittel (1) nach Anspruch 7, **dadurch gekennzeichnet, dass** der erste Teil (22₁") in der Nähe eines zweiten Endes des inneren Rohrs (12₁) angeordnet ist und ein Kolben (22₁") ist, der mit Durchgangslöchern versehen ist, die im Wesentlichen parallel zu dem inneren Rohr (12₁) angeordnet sind, wobei die Flüssigkeit gezwungen wird, durch die Durchgangslöcher zu gelangen, wenn die Rohre (12₁, 12₂) in Bezug zueinander bewegt werden.

9. Anzeigemittel (1) nach Anspruch 7 oder 8, **dadurch gekennzeichnet, dass** der zweite Teil (22₂") ein flüssigkeitsfester Verschluss (22₂") ist, und dass der dritte Teil (22₃ ") auch ein flüssigkeitsfester Verschluss (22₃") ist.

10. Anzeigemittel (1) nach einem der Ansprüche 7-9, **dadurch gekennzeichnet, dass** die Flüssigkeit Öl ist.

11. Anzeigemittel (1) nach einem der Ansprüche 1-10, **dadurch gekennzeichnet, dass** das Verriegelungsmittel (14) ein exzentrisches Verriegelungsmittel (14) ist.

12. Anzeigemittel (1) nach einem der Ansprüche 1-11, **dadurch gekennzeichnet, dass** die Spule (40) durch eine Federanordnung (50) betätigt wird, die angepasst ist, während einer Bildwand-Aufwicklungsphase mit abnehmender Kraftleistung und während einer Bildwand-Abwicklungsphase mit zunehmender Kraftleistung auf die Bildwand (20) zu wirken.

## Revendications

1. Moyen d'affichage (1) comprenant un pied (10) adapté pour fixer un écran (20), dans lequel le pied (10) comprend un premier composant (11) qui appuie contre une surface d'appui sous-jacente (u) et comprend une bobine (40) enfermée dans une cavité dans ledit premier composant (11), dans lequel ledit écran (20) peut être enroulé sur et tiré de ladite bobine (40), dans lequel ledit pied (10) comprend également un moyen de mât télescopique (12) comprenant un tube intérieur (12₁) et un tube extérieur (12₂), lesquels tubes (12₁, 12₂) peuvent être déplacés de manière télescopique l'un par rapport à l'autre, dans lequel ledit pied (10) comprend également un moyen de verrouillage (14) agencé sur ledit tube intérieur (12₁) et manoeuvrable pour verrouiller de manière détachable lesdits tubes (12₁, 12₂) l'un par rapport à l'autre, un moyen de couplage (16) agencé à une première extrémité dudit tube intérieur (12₁) et manoeuvrable pour fixer ledit écran (20) quand il est au moins partiellement tiré de ladite bobine (40), et un moyen amortisseur (22' ; 22") comprenant un premier composant (22₁' ; 22₁") agencé sur ledit tube intérieur (12₁), et un second composant (22₂' ; 22₂') agencé sur ledit tube extérieur (12₂), dans lequel ledit moyen amortisseur (22' ; 22") est manoeuvrable pour exercer une force d'amortissement quand lesdits tubes (12₁, 12₂) sont déplacés l'un par rapport à l'autre avec au moins une valeur de vitesse de seuil prédéterminée, **caractérisé en ce que** ledit moyen amortisseur (22') est un moyen amortisseur à air (22'), et **en ce que** ledit premier composant (22₁') est fixé à une seconde extrémité dudit tube intérieur (12₁), et comprend un moyen étanchéifiant (24) appuyant contre et étanchéifiant une face intérieure dudit tube (12₂), ou ledit moyen amortisseur (22") est un moyen amortisseur à liquide (22"), et **en ce que** ledit moyen amortisseur à liquide (22") comprend également un troisième composant (22₃") agencé à une extrémité dudit tube extérieur (12₂), ledit tube intérieur (12₁) s'étendant à travers ce troisième composant (22₃").

2. Moyen d'affichage (1) selon la revendication 1, **caractérisé en ce que** ledit second composant (22₂') est fixé sur une face intérieure dudit tube extérieur (12₂) de manière étanche à l'air.

3. Moyen d'affichage (1) selon la revendication 2, **caractérisé en ce que** ledit moyen étanchéifiant (24) est un joint (24) en caoutchouc.

4. Moyen d'affichage (1) selon la revendication 3, **caractérisé en ce que** ledit joint (24) est un joint torique (24) agencé dans une rainure (26) dans ledit premier composant (22₁').

5. Moyen d'affichage (1) selon l'une quelconque des revendications 1 - 4, **caractérisé en ce que** ledit tube extérieur (12₂) comprend une sortie d'air (28) agencée à proximité dudit second composant (22₂'), entre ledit second composant (22₂') et ledit premier composant (22₁').

6. Moyen d'affichage (1) selon la revendication 5, **caractérisé en ce que** ladite sortie d'air (28) est un trou traversant (28) dans ledit tube extérieur (12₂).

7. Moyen d'affichage (1) selon la revendication 1, **caractérisé en ce qu'**une chambre à liquide (42) remplie de liquide est agencée entre ledit second composant (22₂") et ledit troisième composant (22₃").

8. Moyen d'affichage (1) selon la revendication 7, **caractérisé en ce que** ledit premier composant (22₁") est agencé à proximité d'une seconde extrémité dudit tube intérieur (12₁), et est un piston (22₁") pourvu de trous traversants agencés sensiblement parallèlement audit tube intérieur (12₁) ce par quoi ledit liquide est forcé de passer à travers lesdits trous traversants quand lesdits tubes (12₁, 12₂) sont déplacés l'un par rapport à l'autre.

9. Moyen d'affichage (1) selon la revendication 7 ou 8, **caractérisé en ce que** ledit second composant (22₂") est un joint étanche aux liquides (22₂"), et **en ce que** ledit troisième composant (22₃") est également un joint étanche aux liquides (22₃").

10. Moyen d'affichage (1) selon l'une quelconque des revendications 7 - 9, **caractérisé en ce que** ledit liquide est de l'huile.

11. Moyen d'affichage (1) selon l'une quelconque des revendications 1 - 10, **caractérisé en ce que** ledit moyen de verrouillage (14) est un moyen de verrouillage excentrique (14).

12. Moyen d'affichage (1) selon l'une quelconque des revendications 1-11, **caractérisé en ce que** ladite bobine (40) est actionnée par un agencement de ressort (50) adapté pour agir sur ledit écran (20) avec une puissance de force diminuant pendant une phase d'enroulement d'écran et avec une puissance de force augmentant pendant une phase de déroulement d'écran.
